# EUROPEAN PATENT APPLICATION

(11) **EP 3 037 706 A1**
(43) Date of publication of application: **29.06.2016**
(21) Application number: 15200793.6
(22) Date of filing: 17.12.2015
(51) Int. Cl.: F16L 3/123, F16L 55/035, H02G 3/32, F16L 3/237

(54) **DUAL P-CLAMP ASSEMBLY**

(30) Priority: 23.12.2014 US 201414581123
(71) Applicant: General Electric Company, Schenectady, NY 12345 (US)
(72) Inventor: SCHILLING, Paul Christopher, Cincinnati, OH Ohio 45215 (US)
(74) Representative: Williams, Andrew Richard

(57) **Abstract**

Upper (26) and lower (28) P-clamps secured to a structure (20) by a fastener (18), upper and lower legs (14) attached to upper and lower annular clamp bodies (12) of the P-clamps, the upper leg on top of the lower leg, and a support plate (36) secured to the structure (20) between the upper P-clamp (26) and the structure (20). The fastener may be disposed through holes (16) in the upper and lower legs (14). Circular or rounded annular clamp bodies (12) may secure articles (8) therein and be attached to the upper and lower legs (14). A loop portion (38) of the clamp body (12) may be encased by an elastomeric sheath (44). Each of the upper and lower legs (14) may include upper (46) and lower flanges (48) outside of the elastomeric sheath (44) and extending away from upper (50) and lower portions (52) respectively of the loop portion (38). The upper and lower legs (14) may be parallel or angled with respect to each other.

## Description

### BACKGROUND OF THE INVENTION

### FIELD OF THE INVENTION

The present invention relates generally to the field of clamps and, more particularly, to P-type clamps.

### DESCRIPTION OF RELATED ART

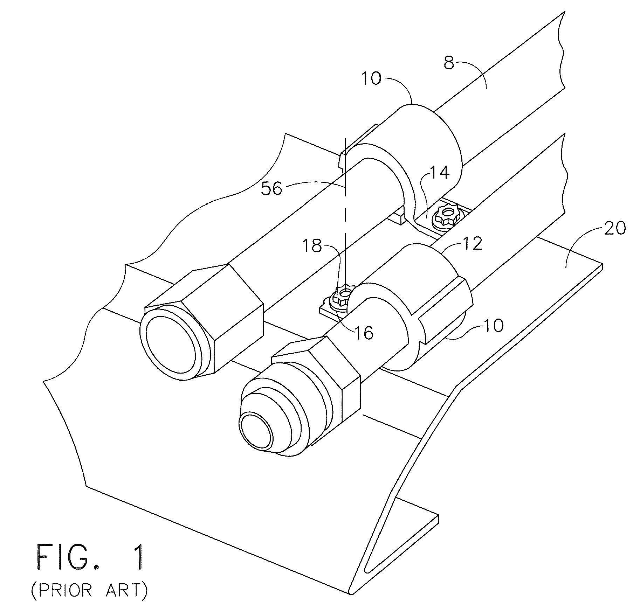

Aircraft engines such as gas turbine engines use P-clamps to secure articles 8 such as conduits, hoses, pipes, hydraulic lines, electrical cables and the like to structures of the engine or aircraft. Illustrated in FIG. 1 is an exemplary P-Clamp 10 including a circular clamp body 12 having at least one leg 14. A pair of opposable legs may be used to help form the clamp body. A fastener 18 such as a bolt or screw or a stud is disposed through circular holes 16, indicated by a hole axis 56, in the legs 14 and used to fasten the P-clamp to a structure 20. In operation, the clamp body 12 is clamped around the article 8 to be secured and the P-clamp 10 is secured to the structure 20 by engaging the holes in the legs 14 with a fastener 18 secured to the structure 20.

Currently, single P-Clamp are used to secure articles such as conduits, hoses, pipes, hydraulic lines, electrical cables and the like to structures of the engine or aircraft because support is required for the clamp as provided by the underlying structure. Without the proper support, the clamp will bend and vibrate until it breaks. Currently, two or more separate adjacent P-clamps and their bolts, nuts, and nut plates and space to place them on the structure uses valuable space and surface material on brackets used to mount the articles and valuable engine space. Thus, there is a need to eliminate and/or reduce the number of parts, material, and space used by securing articles such as conduits, hoses, pipes, hydraulic lines, electrical cables and the like to structures of the engine or aircraft with P-clamps.

### SUMMARY

A dual P-clamp assembly includes upper and lower P-clamps secured to a structure by a fastener, upper and lower legs attached to upper and lower annular clamp bodies of the upper and lower P-clamps, the upper leg stacked and resting on top of the lower leg, and a support plate secured to the structure between the upper P-clamp and the structure. The fastener may be disposed through holes in the upper and lower legs. The upper and lower legs may be parallel or angled with respect to each other.

A circular or rounded annular clamp body may be attached to each of the upper and lower legs and may secure an article therein. A loop portion of the clamp body may be encased by an elastomeric sheath.

Each of the upper and lower legs may include upper and lower flanges located outside of the elastomeric sheath and extending away from upper and lower portions respectively of the loop portion. An article may be disposed in the loop portion of each of the upper and lower P-clamps and the article may be chosen from a group of articles including conduits, hoses, pipes, hydraulic lines, fuel lines, pneumatic lines, and electrical cables.

### BRIEF DESCRIPTION OF THE DRAWINGS

The foregoing aspects and other features of the invention are explained in the following description, taken in connection with the accompanying drawings where:
FIG. 1 is perspective view illustration of an exemplary P-clamp in the prior art used to secure a single line to a bracket of a gas turbine engine;
FIG. 2 is a perspective view illustration of an exemplary dual P-clamp assembly securing two lines to a gas turbine engine bracket;
FIG. 3 is an enlarged perspective view illustration of the exemplary dual P-clamp assembly including top and bottom P-clamps illustrated in FIG. 2;
FIG. 4 is perspective view illustration of a support plate of the assembly illustrated in FIG. 3;
FIG. 5 is a perspective view illustration of the bottom P-clamp illustrated in FIG. 4;
FIG. 6 is a cross sectional view illustration of the bottom P-clamp through 6-6 in FIG. 5;

### DETAILED DESCRIPTION OF THE INVENTION

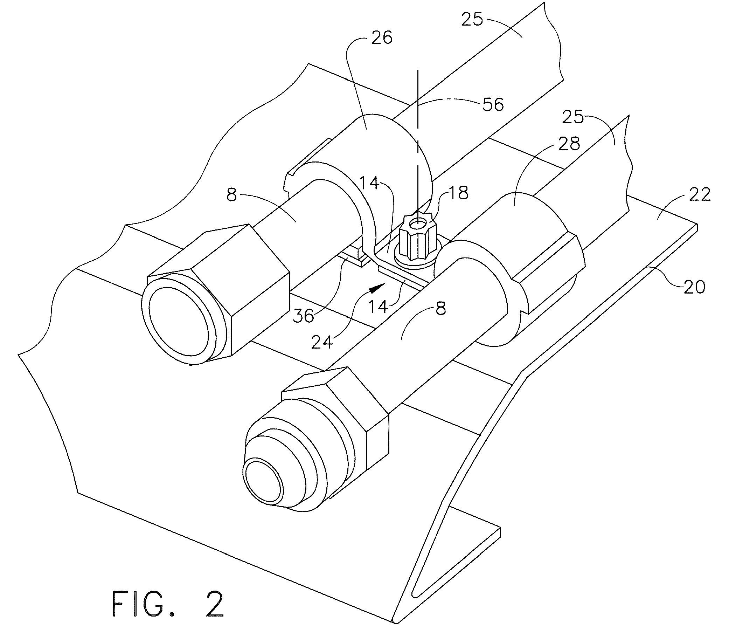

Illustrated in FIG. 2 is an exemplary dual P-clamp assembly 24 illustrated as holding and securing two lines 25 which are representative of the many types of articles for which the dual P-clamp assembly 24 may be used for securing. Among these articles are conduits, hoses, pipes, hydraulic lines, fuel lines, pneumatic lines, electrical cables and the like. The dual P-clamp assembly 24 may be used for securing such articles to an aircraft structure 20 such as an aircraft bracket or an aircraft engine bracket 22 illustrated in FIG. 2. The dual P-clamp assembly 24 includes upper and lower P-clamps 26, 28 secured to the bracket 22 by a fastener 18 such as a bolt or screw or a stud or other suitable fastener.

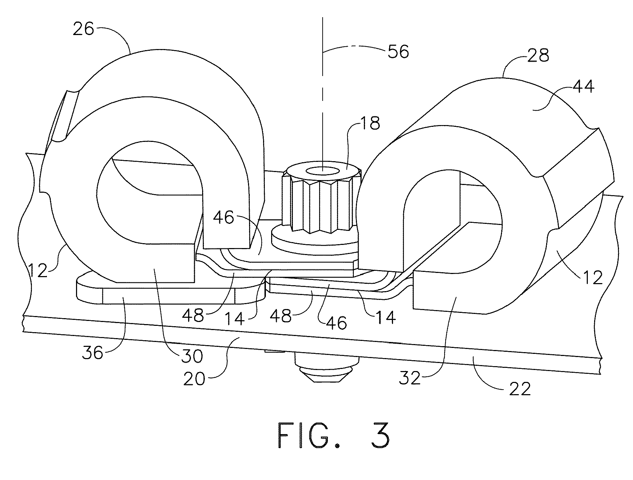

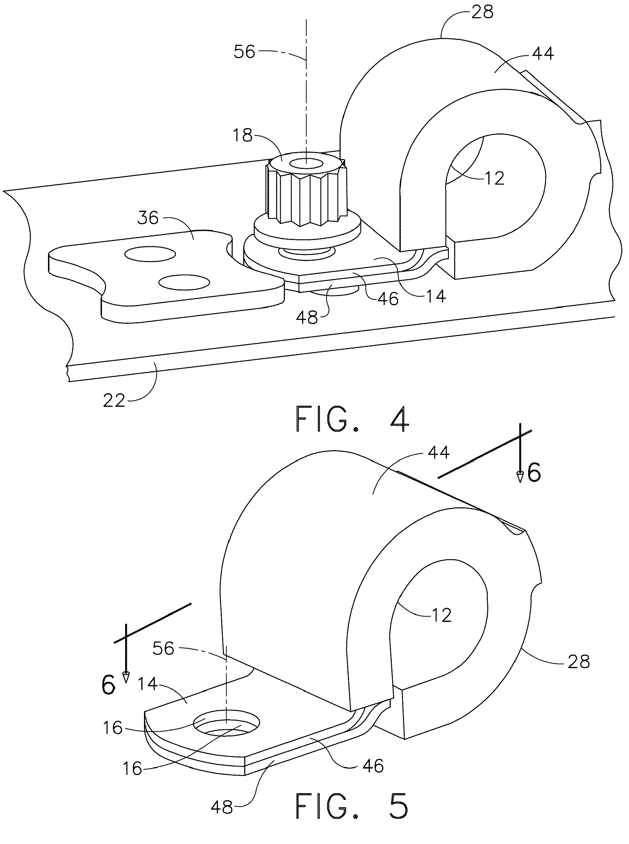

Referring to FIGS. 3-5, each of the upper and lower P-clamps 26, 28 includes a circular or rounded annular clamp body 12 attached to at least one leg 14. The leg 14 of the upper P-clamp 26 is stacked and rests on top of the leg 14 of the lower P-clamp 28. Upper and lower bottom portions 30, 32 of the upper and lower P-clamps 26, 28 are supported to prevent P-clamps from breaking due to vibrations. Support for the lower P-clamp 28 is provided by lower bottom portion 32 resting and being pressed against the structure 20 or engine bracket 22. Support for the upper P-clamp 26 is provided by a support plate 36 secured to the engine bracket 22 between the upper bottom portion 30 of the upper P-clamp 26 and the engine bracket 22. The support plate 36 prevents or reduces the vibrations.

The shape of the support plate 36 may be chosen from many shapes such as circular, square, or curved. The support plate 36 is preferably fixed to the engine bracket 22 or other element and may be riveted, welded, brazed or cast to the engine bracket 22. The support plate 36 may be added to the engine bracket 22 by additive manufacturing. The upper and lower P-clamps 26, 28 may be alike or identical as illustrated herein. The legs 14 have circular holes 16 disposed therethrough and in which the fastener 18, such as a bolt or screw or a stud, is disposed and used to fasten the P-clamp to the structure 20 or engine bracket 22.

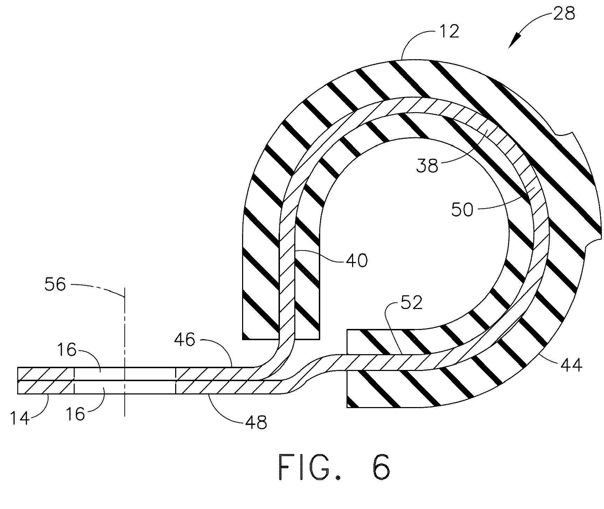

Further referring to FIG. 6, the embodiment of the clamp body 12 illustrated herein includes an inner body 40 including a loop portion 38. The loop portion 38 includes a rounded upper portion 50 and a flat or relatively straight lower portion 52. The loop portion 38 is covered with or encased in an elastomeric sheath 44. Upper and lower flanges 46, 48 extend away from the upper and lower portions 50, 52 respectively and away from the loop portion 38 and are outside of the sheath 44. The inner body 40 may be a single piece element, integrally formed, and metallic. The circular holes 16 are formed in the upper and lower flanges 46, 48 and are axially aligned and centered about a hole axis 56.

The support plate 36 can be rotated around the hole axis 56 which corresponds to the center point of the fastener 18 such as the mounting bolt illustrated in FIGS. 2-4 to provide different angles between the upper and lower P-clamps 26, 28. Thus for example, the legs 14 of the upper and lower P-clamps 26, 28 may be parallel to each other as illustrated in FIG. 2 or angled with respect to each other as illustrated in FIG. 3. This in turn provides greater flexibility for different configurations. The upper and lower P-clamps 26, 28 may also have different sizes, shapes, and type of P-clamps. The dual P-clamp assembly 24 eliminates one bolt and nut or nut plate from every dual P-clamp assembly 24 used. The dual P-clamp assembly 24 reduces the time it takes to assemble an engine thus saving part count, time and money. The dual P-clamp assembly 24 reduces surface area for the mounting clamps and area for brackets could also be reduced, saving cost in sheet metal and material and resulting in weight savings. A curved support plate 36 design provides a visual cue for assembly to fix the first clamp within a curved groove.

The present invention has been described in an illustrative manner. It is to be understood that the terminology which has been used is intended to be in the nature of words of description rather than of limitation. While there have been described herein, what are considered to be preferred and exemplary embodiments of the present invention, other modifications of the invention shall be apparent to those skilled in the art from the teachings herein and, it is, therefore, desired to be secured in the appended claims all such modifications as fall within the scope of the invention.

Various aspects and embodiments of the present invention are defined by the following numbered clauses:
1. A dual P-clamp assembly comprising:
   upper and lower P-clamps secured to a structure by a fastener,
   upper and lower legs attached to upper and lower annular clamp bodies of the upper and lower P-clamps,
   the upper leg stacked and resting on top of the lower leg, and
   a support plate secured to the structure between the upper P-clamp and the structure.
2. The assembly as claimed in clause 1 further comprising the fastener disposed through holes in the upper and lower legs.
3. The assembly as claimed in any preceding clause further comprising an article disposed within each of the upper and lower P-clamps wherein the article is chosen from a group of articles, the group consisting of conduits, hoses, pipes, hydraulic lines, fuel lines, pneumatic lines, and electrical cables.
4. The assembly as claimed in any preceding clause further comprising a circular or rounded annular clamp body attached to each of the upper and lower legs.
5. The assembly as claimed in any preceding clause further comprising a loop portion of the clamp body and an elastomeric sheath covering or encasing the loop portion.
6. The assembly as claimed in any preceding clause further comprising each of the upper and lower legs including upper and lower flanges located outside of the elastomeric sheath and extending away from upper and lower portions respectively of the loop portion and the upper and lower flanges.
7. The assembly as claimed in any preceding clause further comprising an article disposed in the loop portion of each of the upper and lower P-clamps.
8. The assembly as claimed in any preceding clause wherein the article is chosen from a group of articles, the group consisting of conduits, hoses, pipes, hydraulic lines, fuel lines, pneumatic lines, and electrical cables.
9. The assembly as claimed in any preceding clause further comprising the upper and lower legs being parallel or angled with respect to each other.
10. The assembly as claimed in any preceding clause further comprising:
   the fastener disposed through holes in the upper and lower legs,
   a circular or rounded annular clamp body attached to each of the upper and lower legs, and
   a loop portion of the clamp body covered with or encased in an elastomeric sheath.
11. The assembly as claimed in any preceding clause further comprising each of the upper and lower legs including upper and lower flanges located outside of the elastomeric sheath and extending away from upper and lower portions respectively of the loop portion and the upper and lower flanges.
12. The assembly as claimed in any preceding clause further comprising an article disposed in the loop portion of each of the upper and lower P-clamps.
13. The assembly as claimed in any preceding clause wherein the article is chosen from a group of articles, the group consisting of conduits, hoses, pipes, hydraulic lines, fuel lines, pneumatic lines, and electrical cables.
14. An aircraft dual P-clamp assembly comprising:
   upper and lower P-clamps secured to an aircraft bracket or an aircraft engine bracket by a fastener,
   upper and lower legs attached to upper and lower annular clamp bodes of the upper and lower P-clamps,
   the upper leg stacked and resting on top of the lower leg, and
   a support plate secured to the structure between the upper P-clamp and the structure.
15. The assembly as claimed in any preceding clause further comprising the fastener disposed through holes in the upper and lower legs.
16. The assembly as claimed in any preceding clause further comprising a circular or rounded annular clamp body attached to each of the upper and lower legs and securing an article therein.
17. The assembly as claimed in any preceding clause wherein the article is chosen from a group of articles, the group consisting of conduits, hoses, pipes, hydraulic lines, fuel lines, pneumatic lines, and electrical cables.
18. The assembly as claimed in any preceding clause further comprising a loop portion of the clamp body and an elastomeric sheath covering or encasing the loop portion and each of the upper and lower legs including upper and lower flanges located outside of the elastomeric sheath and extending away from upper and lower portions respectively of the loop portion and the upper and lower flanges.
19. The assembly as claimed in any preceding clause further comprising the upper and lower legs being parallel or angled with respect to each other.
20. The assembly as claimed in any preceding clause further comprising:
   the fastener disposed through holes in the upper and lower legs,
   a circular or rounded annular clamp body attached to each of the upper and lower legs, and
   a loop portion of the clamp body covered with or encased in an elastomeric sheath.
21. The assembly as claimed in any preceding clause further comprising each of the upper and lower legs including upper and lower flanges extending away from upper and lower portions respectively of the loop portion and the upper and lower flanges being located outside of the elastomeric sheath.

## Claims

1. A dual P-clamp assembly comprising:
upper and lower P-clamps secured to a structure by a fastener,
upper and lower legs attached to upper and lower annular clamp bodies of the upper and lower P-clamps,
the upper leg stacked and resting on top of the lower leg, and
a support plate secured to the structure between the upper P-clamp and the structure.

2. The assembly as claimed in claim 1, further comprising the fastener disposed through holes in the upper and lower legs.

3. The assembly as claimed in claim 2, further comprising an article disposed within each of the upper and lower P-clamps wherein the article is chosen from a group of articles, the group consisting of conduits, hoses, pipes, hydraulic lines, fuel lines, pneumatic lines, and electrical cables.

4. The assembly as claimed in claim 2 or 3, further comprising a circular or rounded annular clamp body attached to each of the upper and lower legs.

5. The assembly as claimed in claim 3 or 4, further comprising a loop portion of the clamp body and an elastomeric sheath covering or encasing the loop portion.

6. The assembly as claimed in claim 5, further comprising each of the upper and lower legs including upper and lower flanges located outside of the elastomeric sheath and extending away from upper and lower portions respectively of the loop portion and the upper and lower flanges and an article disposed in the loop portion of each of the upper and lower P-clamps.

7. The assembly as claimed in claim 6, wherein the article is chosen from a group of articles, the group consisting of conduits, hoses, pipes, hydraulic lines, fuel lines, pneumatic lines, and electrical cables.

8. The assembly as claimed in any preceding claim, further comprising the upper and lower legs being parallel or angled with respect to each other.

9. The assembly as claimed in claim 8, further comprising:
the fastener disposed through holes in the upper and lower legs,
a circular or rounded annular clamp body attached to each of the upper and lower legs, and
a loop portion of the clamp body covered with or encased in an elastomeric sheath.

10. The assembly as claimed in claim 9, further comprising each of the upper and lower legs including upper and lower flanges located outside of the elastomeric sheath and extending away from upper and lower portions respectively of the loop portion and the upper and lower flanges.

11. An aircraft dual P-clamp assembly comprising:
upper and lower P-clamps secured to an aircraft bracket or an aircraft engine bracket by a fastener,
upper and lower legs attached to upper and lower annular clamp bodies of the upper and lower P-clamps,
the upper leg stacked and resting on top of the lower leg, and
a support plate secured to the structure between the upper P-clamp and the structure.

12. The assembly as claimed in claim 11, further comprising the fastener disposed through holes in the upper and lower legs, a circular or rounded annular clamp body attached to each of the upper and lower legs and securing the article therein, and a loop portion of the clamp body and an elastomeric sheath covering or encasing the loop portion and each of the upper and lower legs including upper and lower flanges located outside of the elastomeric sheath and extending away from upper and lower portions respectively of the loop portion and the upper and lower flanges.

13. The assembly as claimed in claim 11 or 12, further comprising the upper and lower legs being parallel or angled with respect to each other.

14. The assembly as claimed in claim 11, 12 or 13, further comprising:
the fastener disposed through holes in the upper and lower legs,
a circular or rounded annular clamp body attached to each of the upper and lower legs, and
a loop portion of the clamp body covered with or encased in an elastomeric sheath.

15. The assembly as claimed in claim 14, further comprising each of the upper and lower legs including upper and lower flanges extending away from upper and lower portions respectively of the loop portion and the upper and lower flanges being located outside of the elastomeric sheath.
